# EUROPEAN PATENT APPLICATION

(11) **EP 2 146 490 A1**
(43) Date of publication of application: **20.01.2010**
(21) Application number: 08305407.2
(22) Date of filing: 18.07.2008
(51) Int. Cl.: H04M 1/725

(54) **User device for gesture based exchange of information, methods for gesture based exchange of information between a plurality of user devices, and related devices and systems**

(71) Applicant: Alcatel Lucent, 75008 Paris (FR)
(72) Inventor: Zontrop, Pascal, 3128, Baal (BE); Van Broeck, Sigurd, 2980, Zoersel (BE); Trappeniers, Lieven Leopold Albertine, 2200, Herentals (BE); Lou, Zhe, 2000, Antwerpen (BE); Godon, Marc Bruno Frieda, 1840, Londerzeel (BE); Criel, Johan Georges Prosper, 9000, Gent (BE); Claeys, Laurence Annie Hugo Marie, 9000, Gent (BE)
(74) Representative: D'Halleweyn, Nele Veerle Trees Gertrudis

(57) **Abstract**

A user device is disclosed comprising;
a. an identification means for identifying the movement of the user device according to a predetermined gesture;
b. a communication means for communicating with a further user device;
c. a trigger means for triggering an exchange of predetermined information with the further user device by means of the communication means, based on the identification;
**wherein** it further comprises;
d. a buffer means adapted for temporarily storing predetermined information which is to be exchanged when triggered by the trigger means.

Further, related methods, modules, auxiliary devices, and systems are disclosed.

## Description

### Technical field of the invention

The present invention relates to the field of devices, methods and systems for exchanging information between user devices, as for instance mobile phone devices, for example for being used in gaming applications.

### Background of the invention

Traditional games (like card games, board games and so on) address the sense of touch and the social aspect of multiplayer games because the game is a physical object and people have to be in the same room, close to each other, to participate.

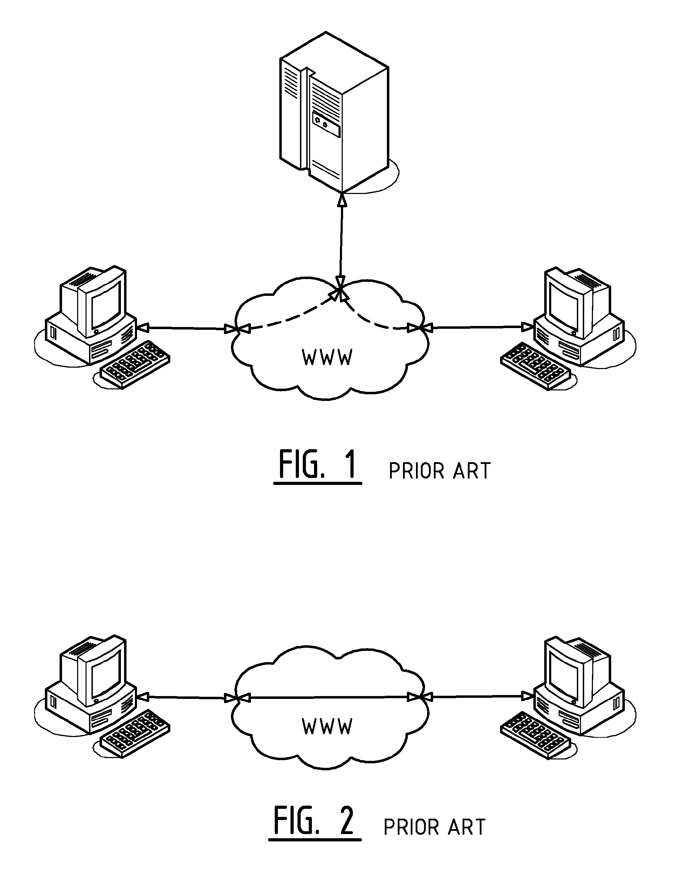

Due to limitation of these games electronic versions have been released. These games can also be played over the internet so that players don't have to be in the same location anymore. Usually one of the two following setups is used to play a remote game: the server based games (see Fig. 1) and the Peer to Peer (P2P) games (see Fig. 2).

The problem with these electronic games is that they have lost emotional and social aspects of to their traditional counterparts or traditional games in general; a button is pushed and the information to be sent is forwarded to the other player, wherever the other player is, and for instance without any eye contact, physical contact or expressive gesture.

There exists a need for electronic devices and applications which provide an increased level of emotional and social interaction.

### Summary of the invention

When terms as "first", "second", "third" and the like are used, this does not necessarily mean that a sequential or that a chronological order is to be assumed.

The term "comprising", should be interpreted as such that it does not exclude other elements or steps.

According to a first aspect of the present invention a user device is disclosed comprising;
a. an identification means for identifying the movement of the user device according to a predetermined gesture;
b. a communication means for communicating with a further user device;
c. a trigger means for triggering an exchange of predetermined information with the further user device by means of the communication means, based on the identification;
   which further comprises;
d. a buffer means adapted for temporarily storing predetermined information which is to be exchanged when triggered by the trigger means.

The predetermined information can be any type of information. It can preferably relate to information which can be used by the users in gaming applications, but other applications are not excluded, as for instance file sharing (sending files triggered by gesture identification/detection) or remote control (using the user device to control another device).

The exchange of information may comprise a transmission of information from the user device to the further user device or a transmission from a further user device to the user device, or both types of transmissions.

The user device and the further user device are typically managed by a first user and a second user respectively. These users, and thus their devices, are preferably located at substantially the same physical location, although this is not necessary for all embodiments of the present invention.

A gesture is a movement made with the device typically performed by the user of the device. The gesture may be a movement, usually of the body or the limbs, that expresses or emphasizes an idea, sentiment or attitude, but it may be any predetermined movement. The predetermined movement or gesture may be such that it allows for fast and easy automatic recognition. It is to be noted that movement may refer to relative or absolute movement. Relative movement can be for instance movement with respect to the physical location of a further user device. Absolute movement can be for instance movement with respect to an initial physical starting position.

It is to be noted that a gesture can be singular or composed of sub-gestures. According to embodiments of the present invention, a gesture may comprise two or more different sub gestures which may be identified/detected at the same time or sequentially. The identification of a movement according to a predetermined gesture may then involve different gesture detection means, associated with different sub gestures. For instance a gesture may comprise or consist of 2 sub gestures; for instance one of them associated with relative movement, and the other associated with an absolute movement.

A typical device can be a mobile phone, a PDA, or any other wireless or portable pocket device which a user can carry with him.

According to embodiments of the present invention, the identification means comprises a presence sensor for detecting the presence of the second user device within a predetermined distance from the user device, corresponding with the predetermined gesture being made.

The distance between the first and the second user device is preferably the geometrical distance between the physical locations of those devices, more specifically the distance between their respective distance sensor sub devices, as for instance wireless technology antennas, transmitters, receivers. The distance may also be the geometrical distance between two reference points on the user devices, as for instance the distance between the centre of mass of the user devices. The distance may be measured according to any state of the art determination technique.

According to certain embodiments, the user device is preferably compatible with Near Field Communication (NFC) technology, as defined by the NFC Forum and further in ISO, and uses NFC technology for detecting the presence of said further user device.

According to certain embodiments, the user device comprises a motion sensor for identifying the gesture. The motion sensor can be a movement sensor, it may for instance be an accelerometer, as for instance an RF-MEMS device, or an Infrared (IR)-camera with reference IR-light emitting diode (LED).

According to certain embodiments, the user device may comprise a motion sensor as well as a presence sensor.

According to embodiments of the present invention, the buffer means further comprises a basic buffer logic. The trigger means may comprise the basic buffer logic.

The basic buffer logic is logic which manages the buffer content and actions, and may perform any combination of at least the following functions;
- communicating with a repository within said user device;
- communicating with a device logic means comprised in the device;
- communicating/exchanging information with further user devices.

The repository is a data storage means adapted for temporarily storing and controlling collectables of a gaming application or similar information exchange application. It may be adapted to communicate with the buffer means, or to provide access to it by the buffer means. In certain embodiments the repository may be part of the buffer means.

According to embodiments of the present invention, the buffer means further comprises a program buffer logic, provided into the buffer by a program running on the device logic means.
This program buffer logic can provide certain low-level functionalities. This can be for instance code, gesture specifications and protocol. The code can be code that every transmission is checked against so that the buffer can take certain decisions upon the information (e.g. put cards in repository, ignore wrong input, etc.). The gesture specifications can be the specification of which gesture triggers which functionality. The protocol can be the protocol that the game uses to send and receive information.

The predetermined information can be determined by means of the basic buffer logic and/or program buffer logic.

According to embodiments of the present invention, the buffer means further comprises a means for identifying and authenticating the further user device before exchanging data with it.

According to embodiments of the present invention, the buffer means further comprises a means for encrypting the predetermined information in the buffer means.

According to a second aspect of the present invention, a method for exchanging information between a first user device and a second user device is disclosed, comprising:
a. arranging the first user device and the second user device such that the making of a predetermined gesture with the first user device is associated with a predetermined information exchange from the first user device towards the second user device;
b. making the gesture, hereby performing the information exchange from the first user device to the second user device;
   further comprising
c. storing the predetermined information in a buffer means adapted for temporarily storing the predetermined information;
d. performing the information exchange from the buffer with the second user device, when triggered by the gesture.

According to embodiments of the present invention, the making of a predetermined gesture comprises reducing the distance between the first user device and the second user device below a first threshold distance, the detection by the first user device of the presence of the second user device within a first threshold distance of the first user device resulting in the information exchange between the first user device and the second user device.

According to embodiments of the present invention, identifying the predetermined gesture is performed by a motion sensor on the first user device.

According to embodiments of the present invention, the predetermined information exchange comprises information indicating which application should be launched on the further user device.

According to embodiments of the present invention, the predetermined information exchange comprises information relating to a step in a multi-player game, the game being of discontinuous nature.

According to embodiments of the present invention, the game is of the exchange type or of the back-and-forth type.

According to embodiments of the present invention, the first and second user devices may be located at substantially the same physical location, meaning that the first and second user are within range of sight, or within range of touch, from each other. They may be physically separated by a distance of for instance 100 meters, 50 meters, 10 meters, 5 meters, 1 meter, 50 centimetres, 10 centimetre.

It is to be noted that the user device and the further user device should be within each others communication range, as determined by the communication means and thus communication technology used for the communication /information exchange between the user devices. If this technology is for instance Bluetooth, they should preferably be within a range of about 10m separated from each other. If they communicate via GSM, users would be in range as soon as they are connected to the mobile network and certain conditions are fulfilled.
If NFC technology is used for triggering the information exchange, the devices are obviously within each others reach for NFC information exchange when the trigger occurs.

Embodiments of the present invention provide the advantage that the exchange of information between the first user device and the second user device or first user and second user respectively can occur with an increased social and emotional experience. By making a gesture, as opposed to for instance pressing a button, the user may experience a more traditional and social interaction with the other user.

This experience may be further enhanced when the first user and the second user are located at substantially the same physical location, whereby the first user and second user can see each other, or can touch each other. When the first and second user and thus first and second user devices are located at substantially the same physical location, state of the art telecommunication techniques, or adaptations of such state of the art telecommunication techniques can be used in order to recognize said gesture. For instance when the making of a predetermined gesture comprises reducing the distance between the first user device and the second user device, near field communication (NFC) technology can be used, which allows the transfer of information for distances between transmitter and receiver of about 1 centimetre up to distances of 10, 20, 30 centimetre. The first and the second user, and corresponding user devices, can then exchange information by bringing the first user device and second user device closer to each other. This can occur by for instance bringing the first user device closer to the second user device or by bringing the second user device closer to the first user device, whereby the second and first user device are kept at the same location respectively. Alternatively both user devices may be brought towards each other and touch or reach a distance smaller than a predetermined threshold distance at a certain location, typically somewhere between the locations of the first and second user devices.

According to preferred embodiments of the present invention, the threshold distance is determined by the technology used for performing the information exchange. As mentioned before, for example for NFC technology, the threshold distance may be set at about 10 centimetres, more functionally described, it may be set at the distance where the NFC technology allows communication between the first and the second device. When using other technologies as for instance Bluetooth, infrared or other short distance communication technologies, different distances may be applicable.

It is to be understood that the threshold distance may vary within a limited range, as for instance, signal strength and environmental parameters may influence the distance at which normal and errorless communication can occur.

According to embodiments of the present invention the threshold distance has a limited variation of about 100, 10, 5, 1 centimetre depending on for instance the respective technology used. This means that not only the predetermined threshold distance may be variable, but that also, once that the predetermined threshold distance has been defined, the real distance measurements of the devices may vary within the limited variation of for instance about 1, 5, 10, 100 centimetre. For instance at low battery level the device may not allow communication over larger distances, and may wait until a shorter distance to the other user device has been reached before exchanging the information.

According to preferred embodiments of the present invention the threshold distance can be zero, this means that the first and second user device get into physical contact before the information exchange takes place. Examples of such technologies are a contact plate or a cable.

According to embodiments of the present invention the predetermined gesture is at least partially, or wholly, identified by a gesture sensor on the first (or the second) user device.

According to embodiments of the present invention the predetermined information exchange may comprise information indicating which application should be launched on the user device which is receiving the exchange information.

According to embodiments of the present invention the predetermined information exchange and, if applicable, any further information exchange, may comprise information indicating which application has been launched on the user device which is sending information.

According to embodiments of the present invention the information exchange comprises information relating to a step in a two-player or multi-player game, the game being of discontinuous nature. With discontinuous nature it is meant that the game comprises a finite amount of information exchanging steps between a first and a second user device, as opposed to a game of continuous nature, in which a continuous exchange of information takes place (for instance two or multiplayer action games).

According to preferred embodiments the game is of the exchange type or of the back and forth type.

According to a third aspect of the present invention, a buffer module is described for being used in combination with a user device, adapted for temporarily storing predetermined information to be forwarded to a further user device, and adapted for forwarding the predetermined information upon receipt of a trigger resulting from the identification of a predetermined gesture being made by the user device.

The buffer module may further comprise basic buffer logic means and program buffer logic means for managing the presence and exchange of information in the buffer.

The buffer module may further be adapted for storing the predetermined information in an encrypted format.

The buffer module can be positioned in between the device logic means and a gesture control means within the user device.

The buffer module can be adapted for communicating with the device logic means and a gesture control means within the user device. The gesture control means can comprise the gesture identification means.

The buffer module can be integrated into a user device.

It can also be integrated into a separate, auxiliary device, adapted for communicating with and optionally adapted for being attached to the user device.

According to a fourth aspect of the present invention, an auxiliary user device is disclosed adapted for communicating with a main user device, comprising
- a buffer module according to the third aspect of the present invention;
- a means for identifying the movement of the auxiliary user device according to a predetermined gesture.

The auxiliary device can provide the respective functionalities to a user device which a priori does not have (all of) the relevant functionalities according to embodiments of the present invention.

The exchange of predetermined information, provided into said buffer module while being connected to said user device, and triggered by gesture detection, can be performed by the auxiliary device itself, without at the moment of exchange of information being connected to the user device. After the exchange the auxiliary device can communicate/synchronise with the user device in a different step. This brings the advantage that a user does not have to carry his user device with him.

According to certain embodiments, the auxiliary user device is preferably compatible with Near Field Communication (NFC) technology, as defined by the NFC Forum and further in ISO, and uses NFC technology for detecting the presence of said further user device.

According to a fifth aspect of the present invention, a system is disclosed for exchanging information between a set of at least 2 user devices, each user device of the set according to the first aspect of the present invention, the system being adapted for being able to perform a method according to the second aspect of the present invention. It should be noted that one or more user device(s) within such system (for instance one or two) may also comprise or consist of auxiliary user devices, according to the fourth aspect of the present invention.

It is to be understood that the making of a gesture and the associated transfer of information between a first and a second, or a second and a first user device respectively can occur at the same time or at different moments in time. This may be linked with the various options in decreasing the distance between the first user device and the second user device as explained above. This may also be linked with the context of the information exchange, as for instance the gaming context. For some applications, as certain gaming applications, an information exchange in both directions, i.e. from first to second and from second to first user device, may be desirable, as for instance in certain magic cards games. For other types of games an alternating exchange from first to second and from second to first user device may be appropriate or desired. This may be the case in for instance games like chess, certain other card games, and similar action-response games.

According to the present invention different means for recognizing the gesture of a user device or with a user device are and have been described. Both types of gesture identification may be combined during, for instance in the context of one gaming session, for the same user, or each user may use its own gesture identification means, adapted for identifying the gesture made, and for triggering the information exchange.

It is further to be noted that the information exchange as described in the present description, is not limited to a single pair of user devices, but may involve a plurality of user devices, which may communicate according to different sequences. For instance a single user device may exchange the same or different information with a plurality of other user devices, sequentially or in parallel, or different user devices may pass information around to each other. The plurality of users may exchange information on a 2 by 2 basis for a predetermined sequence of pair interactions.
The skilled person will understand that it is a matter of appropriately adapting the device logic and/or basic buffer logic and/or program buffer logic in order to allow such and other scenario's, without departing from the general concepts as illustrated by the appended claim set.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

Features and embodiments of the different aspects of the present invention, are considered to be applicable for other aspects of the present invention, and are therefore not always repeated explicitly, but there are within the scope of the present invention, as will be recognised by the person of ordinary skill.

### Brief description of the drawings

The accompanying drawings are used to illustrate embodiments of the present invention.
Fig. 1 illustrates PRIOR ART
Fig. 2 illustrates PRIOR ART
Fig. 3 illustrates a flow diagram for embodiments of the present invention.
Fig. 4 illustrates embodiments of the present invention in which the logic functionality is partially or fully centralised and at least partially provided on the network side.
Fig. 5 illustrates embodiments of the present invention in which the logic functionality is decentralised or distributed over the two user devices.
Fig. 6 illustrate embodiments of the present invention of the peer-to-peer type, wherein communication between the two user devices occurs without using an external network, and wherein optionally an external network may be consulted to gather data, the latter preferably being of a relatively limited extent.
Fig. 7 illustrates further embodiments of the present invention in which the user devices themselves do not have access to an external network, but where the user devices can be connected to external devices, which on their turn can have access to an external network for gathering data, in order to change their state or for synchronisation purposes, after which the information exchange between the two user devices is occurring without interaction with an external network, being of the peer-to-peer type.
Fig. 8 illustrates the functional structure of devices according to embodiments of the present invention.
Fig. 9 illustrates a typical interaction scenario according to embodiments of the present invention.
Fig. 10 illustrates embodiments of the present invention in which the predetermined information which is to be exchanged between two user devices is encrypted.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

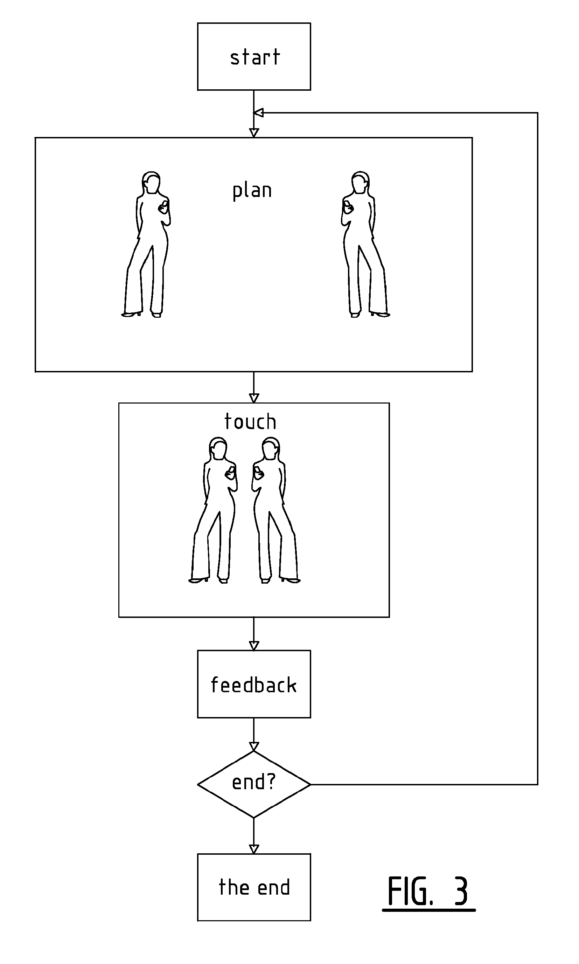

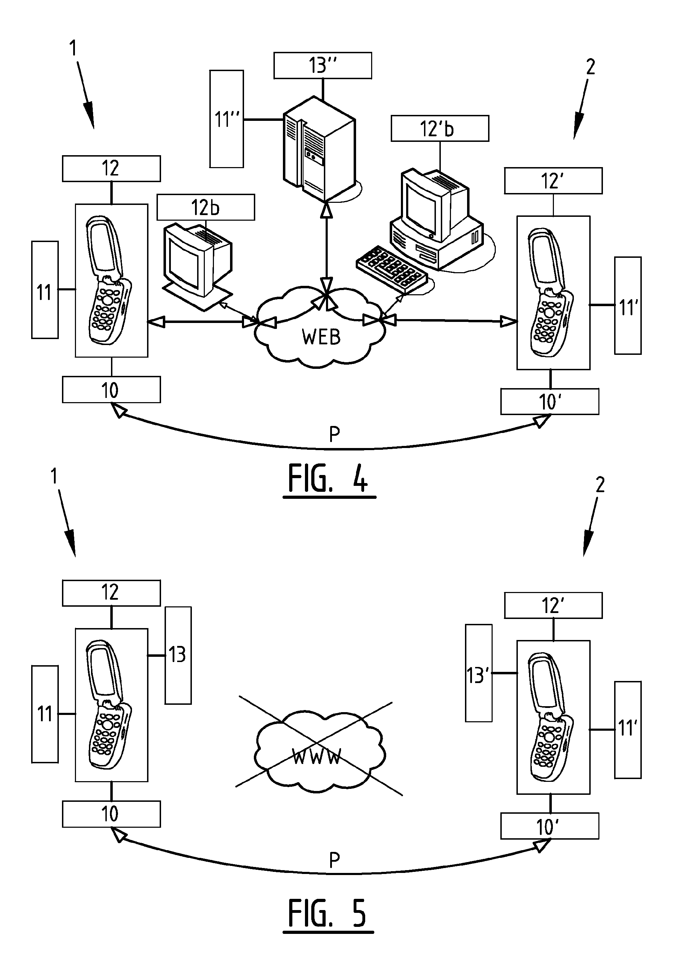

Aspects of the present invention introduce a way of playing games on portable electronic devices that enable the users to experience a sense of touch or other gestures and which provide a more emotional and/or social interaction between users. An illustration of embodiments of the present invention can be retrieved in Fig. 3. Hereby aspects of the present invention provide numerous advantages; for instance gestures make the game more tangible and intuitive. The gesture or "touch" will address also the social aspect of the two- or multi-player game. The stages of the games can be controlled by "touch"; this may for instance mean that players can plan their move in a first stage, and when they are ready they can enter the next stage be touching or getting close to other user devices. In the last stage the move will be executed and the result can be shown. If appropriate, the application, as for instance a gaming application, can then go back to the first state where the users have to plan their next move. This is illustrated in Fig. 3. After the start of the game users may independently plan their moves, for instance, they may choose their cards or only one of the users may for instance prepare a move in a game of chess. According to embodiments of the present invention, the move is then exchanged with the other user by a "touch mechanism", i.e. by bringing the two mobile devices of the respective users closer to each other or against each other such that the transfer of information can take place between the two devices, it can be from user device 1 to user device 2 of from user device 2 to user device 1 or the exchange can take place in both directions at the same time depending on the application. After the "touch", feedback can be provided to the users by the gaming applications running on the user devices or by gaming applications which are remotely running and controlling the user devices. This may result in the end of the game or the previous procedures can be iterated for a finite number of times. After one procedure or after a number of finite iterations the game may be finished and the procedure ends. According to certain embodiments the "plan phase" or initialization phase can correspond to the phase in which users select their application and in which a "touch" phase will transfer information about the application towards the other user, which can then be initialized on the other user device. The "feedback" can in such case be that the application starts at the other user device. This type of embodiments can be combined with the embodiments in which information, corresponding for instance to moves in gaming applications are exchanged. For instance, the first time, the information which is transferred may comprise information about the application to be launched to the other user device, while the first or further iterations may comprise gaming exchanges or information exchange linked to gaming applications or information exchange corresponding to moves from one or more users in gaming applications. In Fig. 4 an architecture is shown according to embodiments of the present invention. This architecture creates a new framework that will enrich games with a sense of touch.

At least the following blocks can be defined within this framework. A first element of block can be adapted for controlling the touch or NFC based communication, the "Touch Control". A second block can be adapted for controlling the collectables of the game for example monsters, cards, cars,... (the "Repository"). A third block can be adapted for controlling the output towards human machine interfacing sub devices of the user device ("Output Control") which is adapted for outputting the information to a screen, speaker, etc. of the user device as for instance the mobile device. Optionally complementary devices like computers or (IP-) TV's also have screens and speakers and are controlled by this third block or output control block. Further, a fourth block can be defined to illustrate where the logic of the game can be placed "the Logic". This block illustrates where the processing of the data can occur. The location of the logic can be different for different applications; it may thus be application dependent. Typically also an input control block may be present. In a multi-platform game the required computer may also comprise some of the logic functionalities. In Fig. 4 the first user device (1) and a second user device (2) are depicted which are able to exchange information in peer-to-peer P mode, but which may also be connectable to each other by means of a network, as for instance by means of a mobile internet solution. The first user device (for instance a mobile phone) thus comprises a repository (11), an output control (12), and a touch control (10). An external output may be present such that also an output control (12b) may be present at the site of the first user. Similarly the second user device comprises a touch control (10'), a repository (11') and an output control (12') and a further output may be provided comprising a further output control (12'b). An external server may comprise a part of the logic functionality (13") and may further comprise an extra repository (11").
In Fig. 5 embodiments of the present invention are illustrated in which the logic functionality is decentralized or distributed over the two user devices and no logic functionality needs to be present in the network. The first and second user devices are adapted for exchanging information in a peer-to-peer mode by for instance an NFC technology or any other state of the art technology. This can be seen in fig. 5.

Embodiments of the present invention do not necessarily need a communication over an "external" network as for instance a mobile network or the internet (possibly carried over to a mobile network). The first user device has a repository (11), an output control (12), logic (13) and a touch control (10). The second user device comprises a repository (11'), an output control (12'), a logic (13') and a touch control (10'). It is to be noted that the touch control objects may (as shown in fig. 4 and 5) be able to create their own connections (P); this can be done through NFC, Wi-Fi, infrared, Bluetooth or other wireless technologies. These connections do not require the web and can be desired as they can be free of charge, typically.

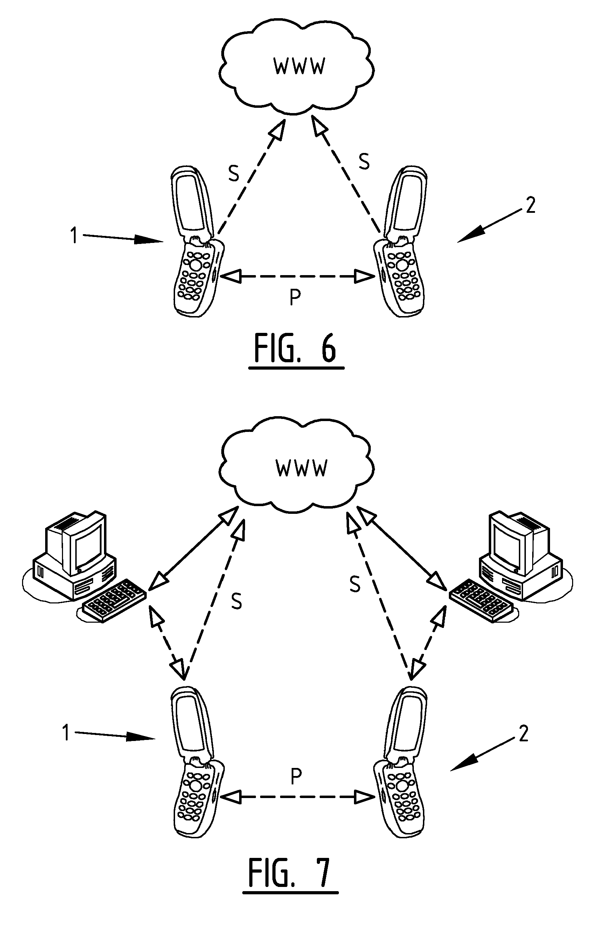

Another example of the embodiments of the present invention is depicted in Fig. 6 (stand alone example). Stand alone applications are applications that require on the user side only a mobile NFC device. Data may be gathered over the network but most of the time data exchanged will occur via "touch" with other users (peer - to-peer, P). The data gathering over the network is hereby optional. The S and P connections are preferably both discontinuous connections. An example of a gaming application which can make use of this architecture is illustrated as follows; in a strategic card game, two users would like to play an electronically enhanced version of a card game, like "Magic the Gathering"®, "Yu-gig-oh"®, on their NFC enabled devices as mobile phones. Each user then sets up the game on his mobile phone and strategically selects their move as for instance selected their first card/attack. When both of them have selected their first move, this information is transferred to the buffer means, the users touch each others phone or make appropriate gestures in order to trigger the transfer of information from the buffer means, the transfer of their move(s). Both phones may register the touch and will transfer the information and get thus information about the other player's move, and both user devices will advance to the next state. In this state the interaction between the exchanged information and the application can take place; for instance a battle between exchanged information relating to creatures being part of a game, may be simulated and outputted towards the user devices display and/or speakers.

The previously explained steps can then be repeated until the end of the game is reached, after which the application can be closed.

It is to be understood that, in order to play a game for instance, the same applications run on both user devices in parallel. In alternative examples there may be a single centralized application running which is communicating a display for the outputting of information towards the first and second user devices, although this would require the connectability of both user devices towards the internet or a communication network, for instance a mobile phone network.

Another example is described as follows; the rock-paper-scissors application being a two-player gaming application, can be digitally announced by using embodiments of the present invention for instance by using an NFC technology and thus NFC enabled user devices. Both users or players can start the gaming application on their mobile device and indicate whether they want to select rock, paper, scissor respectively. They may select this by means of a human machine interface as a graphical user interface, but they may also select this by making the appropriate gesture. When both users have picked their move they can make their gestures or bring their mobile devices close to each other after which the touch controller communicates for instance via a wireless technology, for instance NFC, the information and thus exchanges their moves. Afterwards both devices may see the outcome of the move or round, possibly enhanced with media (sound, movies, pictures,...) and may further enable the users to select their next move.

Another example of embodiments of the present invention is depicted in fig. 7, showing multi-platform applications in which user devices are do not have direct access to the internet or a communication network, or are at least temporarily connected with another platform, as for instance a PC. These multi-platform applications are applications that do not only require mobile device on the side of the user. For instance a PC (with logic) and a mobile device can be used simultaneously. The PC can for instance be located at home or in public places so that the user can upgrade or fine tune his next step. As soon as the user is ready he can upload his next move or creature to his user device, meet with his opponent and touch his mobile to begin the game. In this way, the mobile device won't need to connect to the internet (although this may possible) it may store its data and as soon as the user gets all the data, the data will be exchanged or sent to the PC. This PC can then connect to the internet for instance to update the global profile of the user, of to retrieve further application modules, if applicable.

An example of a gaming application corresponding to the previous example depicted in Fig. 7 is the mini-monster application. In a mini-monster gaming applications users can create a mini-monster by preparing it as feeding it, reading it, etc. on their desktop computer. They can for instance also train their monster by playing games with it. As soon as the mini-monster is prepared they may confront it with a different mini-monster belonging to a second user by transferring the monster to their mobile device. As soon as the user meets its opponent who has prepared a similar monster they may exchange the information by "touch" in order to start a battle between the monsters.

It is to be noted that one of the limitations of digital traditional games are facing is that the lack human interaction or feedback between the players. Distributed games that can be played for the internet for example, often only have text chat interfaces. The aspects of the invention provide a unique experience to play digital games by introducing gestures (like "touch"). Touch enriches the social aspect, security, dynamicity ... of the played game.

It is an advantage of the aspects of the present invention that they allow multi-player games that they not need continuous connectivity. Especially on mobile device which may have to communicate by means of a mobile network (or a mobile network operator) this can create a problem or may be costly. With local wireless technologies, the use of which is proposed in embodiments of the present invention, this problem will no longer exist. Another advantage of embodiments of the present invention is that gestures enrich the gaming experience of the users.

Moreover, through "touch" the user is able to control secure communication.

Another advantage is that users, according to certain embodiments of the present invention, see or touch each other and are, at a substantially same physical location, such that cheating becomes more difficult.

In certain embodiments there is no need for connecting to the server or the internet.

The "touch" further also provides an enhanced social aspect of the game. In certain embodiments, where NFC technology is used for exchanging information between user devices, the power consumption can be reduced as the technology uses less power than for instance mobile network communication technology.

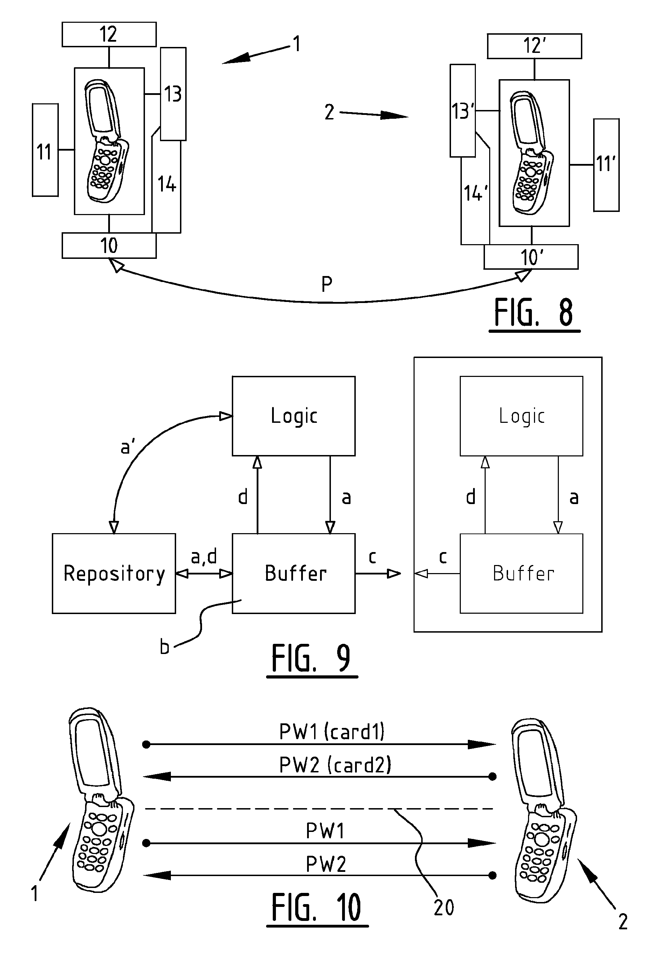

Certain aspects of the present invention can be seen as follows: to make sure that the transition of information items (cards, monsters, statistics) can be performed in a secure and fair way an extra block can be defined; the touch logic interface (TLI; buffer means, in a certain view and according to certain embodiments, an "intelligent" buffer means). This block may reside between the logic of the application, typically located in a device logic means, and the touch control of the device (see Fig. 8) and can function as an interface between the logic and the touch control. This block may further be provided with some extra functionalities, providing further advantages.
The touch logic interface block can provide the following functionalities:
- the TLI can be used as a buffer. Without the TLI the logic would not have these calculations and would send the result to another device. But when there is no "touch" at that moment, it has no other user device nearby or present, these data will be lost. The TLI will cause the logic to deposit the transformed information inside the buffer of the TLI. And the two user devices touch or exchange information being triggered by the making of a gesture or gestures, the touch control communicated with the TLI which will associate this with the sending of the information stored in the buffer, and will perform the information exchange. (PW1 (card 1), PW2 (card 2))
- the TLI may comprise basic buffer logic
- the TLI may comprise program buffer logic
- the TLI may interact/communicate with the repository
- the TLI may communicate with the game logic
- the TLI may further comprise a functionality adapted to ensure that the game logic isn't hacked, for instance by providing better cards for one of the user devices or users. The TLI may also provide encryption functionality of the data to be transferred.

A detailed description of an example of how the device logic / basic buffer logic / and program buffer logic can interact in a typical scenario is described below, and is illustrated in Fig. 9:
a : the device logic sends out information to the program buffer logic. If may also send the items to the buffer and the buffer may then send them to the Repository.
a' : the device logic could also send the items straight to the repository.
b : the buffer prepares the data for the first move and waits for the trigger by a predefined gesture.
c : the gesture was identified and the prepared data is exchanged between the user devices.
d : the buffer deletes or adds the items from the repository.

A possible secure information exchange is depicted in Fig. 10. The first device 1 and the second device 2 are alerted for a change of information when triggered by predetermined gestures (20). The TLI's of the first and second device can create a (e.g. random) encryption key (PW 1, PW2 respectively) and make sure that the data is encrypted with it before the "touch". Once the information exchange has been triggered and performed, and the user devices have received each other's information, for instance the card of the other user (encrypted card 1: PW1(card1), encrypted card 2: PW2(card2)), the encryption keys can be exchanged. The other user's cards can then be decrypted and delivered to the logic.
This way a device can never read the other person's card before sending its own card, and cheating can be avoided.

Some functions have been mentioned herein. They can be implemented using software, firmware (for instance fixed logic circuitry), hardware, manual processing, or any combination of these implementations. The terms "module," "component", "functionality," and "logic" as generally represent software, firmware, hardware, or any combination thereof. In software implementation cases, the module, component, functionality, or logic represents program code that performs specified tasks when executed on one or more processor(s) (for instance any of microprocessors, controllers, and the like). The program code can be stored in at least one computer readable memory device or storage means. The methods and systems are platform-independent and they may thus be implemented on different platforms.

Methods according to embodiments of the present invention may also be described in the context of computer executable instructions. Computer executable instructions can include routines, programs, objects, components, data structures, procedures, modules, functions, and the like for performing certain functions or implement certain abstract data types. The methods described herein may also be applicable in a distributed computing environment where functions are performed by remote processing devices that are linked through a communications network. In a distributed computing environment, computer executable instructions may be located in both local and remote computer storage media, including memory storage devices.

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

## Claims

1. A user device comprising;
a. an identification means for identifying the movement of said user device according to a predetermined gesture;
b. a communication means for communicating with a further user device;
c. a trigger means for triggering an exchange of predetermined information with said further user device by means of said communication means, based on said identification;
**characterised in that** it further comprises;
d. a buffer means adapted for temporarily storing predetermined information which is to be exchanged when triggered by said trigger means.

2. A user device according claims 1, wherein said identification means for comprises a presence sensor for detecting the presence of said second user device within a predetermined distance from said user device, corresponding with said predetermined gesture being made.

3. A user device according to any of the previous claims, comprising a motion sensor for identifying said gesture.

4. A user device according to claim 1, wherein said buffer means further comprises a basic buffer logic.

5. A user device according to claim 4, wherein said basic buffer logic is adapted for communicating with a repository within said user device.

6. A user device according to claim 4 to 5, comprising a device logic means, and wherein said basic buffer logic is adapted for communicating with said device logic means.

7. A user device according to claim 4 to 6, wherein said buffer means further comprises an program buffer logic, provided by a program running on said device logic means.

8. A user device according to claim 4 to 7, wherein said predetermined information is determined by means of said basic buffer logic and program buffer logic.

9. A method for exchanging information between a first user device and a second user device, comprising:
a. arranging said first user device and said second user device such that the making of a predetermined gesture with said first user device is associated with a predetermined information exchange from said first user device towards said second user device;
b. making said gesture, hereby performing said information exchange from said first user device to said second user device;
**characterised in that** it further comprises
c. storing said predetermined information in a buffer means adapted for temporarily storing said predetermined information;
d. performing said information exchange from said buffer to said second user device, when triggered by said gesture.

10. A method according to claim 9, wherein the making of a predetermined gesture comprises reducing the distance between said first user device and said second user device below a first threshold distance, the detection by said first user device of the presence of said second user device within a first threshold distance of said first user device resulting in said information exchange from said first user device to said second user device.

11. A method according to claim 9, wherein identifying said predetermined gesture is performed by a motion sensor on said first user device.

12. A buffer module for being used in combination with a user device, adapted for temporarily storing predetermined information to be forwarded to a further user device, and adapted for forwarding said predetermined information upon receipt of a trigger resulting from the identification of a predetermined gesture being made by said user device.

13. A buffer module according to claim 12, further comprising basic buffer logic means and program buffer logic means for managing the presence and exchange of information in said buffer.

14. A auxiliary user device adapted for communicating with a main user device, **characterised in that** it comprises
- a buffer module according to claim 12 or 13,
- a means for identifying the movement of said auxiliary user device according to a predetermined gesture.

15. A system for exchanging information between a set of at least 2 user devices, each user device of said set according to claim 1 to 8, said system being adapted for being able to perform a method according to claim 9 to 11.
